# FASCICULE DE BREVET EUROPEEN

(11) **EP 0 760 986 B1**
(45) Date de publication et mention de la délivrance du brevet: **26.08.1998**
(21) Numéro de dépôt: 95920907.3
(22) Date de dépôt: 29.05.1995
(51) Int. Cl.: G06K 19/077

(54) **PROCEDE DE REALISATION D'UN MODULE ELECTRONIQUE ET MODULE ELECTRONIQUE OBTENU SELON CE PROCEDE**
VERFAHREN ZUR HERSTELLUNG EINES ELEKTRONISCHEN MODULS UND NACH DIESEM VERFAHREN HERGESTELLTES MODUL
METHOD FOR FABRICATING AN ELECTRONIC MODULE AND ELECTRONIC MODULE OBTAINED THEREBY

(30) Priorité: 27.05.1994 EP 94810312
(43) Date de publication de la demande: 12.03.1997
(73) Titulaire: GUSTAFSON, Ake, CH-1618 Châtel-St-Denis (CH)
(72) Inventeur: GUSTAFSON, Ake, CH-1618 Châtel-St-Denis (CH)
(74) Mandataire: BOVARD AG - Patentanwälte
(86) Numéro de dépôt international: EP9502038
(87) Numéro de publication internationale: WO9533246

(56) Documents cités:
- EP-A- 0 128 822
- EP-A- 0 326 822
- EP-A- 0 334 733
- WO-A-94/22110

## Description

La présente invention concerne tout d'abord un procédé de réalisation d'un module électronique constitué d'un circuit électronique encapsulé ou incrusté dans un support en matériau synthétique, ledit support présentant deux faces principales essentiellement planes et parallèles, ainsi que ledit module découpé selon un format déterminé, notamment au format d'une carte de crédit.

On trouve depuis quelques années de nombreuses applications de modules électroniques du format d'une carte de crédit présentant deux faces principales, c'est-à-dire deux faces dont les dimensions sont nettement plus importantes que l'une des dimensions (épaisseur de la carte) des autres faces, étant souhaité que les deux dites faces principales soient de préférence planes et parallèles et munis d'un composant électronique comportant en particulier des moyens de mémoire électronique munis d'un code, relié à une antenne, comme par exemple le transpondeur ou circuit électronique interrogeable à distance par des moyens inductifs, représenté à la figure 7 de la demande EP-A-0.573.469. De tels modules peuvent être utilisés par exemple comme badges d'identification.

D'autres applications nécessitent de pouvoir avoir accès à une ou plusieurs pistes de contact disposées généralement à fleur de l'une des faces principales du module, lesdites pistes étant reliées de manière permanente à un circuit électronique disposé à l'intérieur du module, afin de pouvoir échanger des données avec un dispositif électronique adéquat muni lui aussi de moyens permettant d'établir un contact avec la ou les pistes de contact du module. Des modules de ce type sont utilisés par exemple comme cartes de débit téléphoniques.

Un module équipé des deux types de circuits mentionnés, soit un premier circuit à accès par des pistes de contact et un deuxième circuit à accès par des moyens inductifs permet en particulier d'augmenter la sécurité d'utilisation de la carte de débit ou de crédit.

Divers procédés existent pour encapsuler un composant électronique, avec ou sans bobine formant antenne d'émission et de réception comme dans le cas de la demande mentionnée précédemment, à l'intérieur ou à la surface d'un support en matériau synthétique afin de le protéger de l'humidité, de la poussière et des contraintes mécaniques, ledit support ayant finalement le format d'une carte de crédit ou tout autre format convenable, afin que le dispositif puisse facilement être manipulé.

Une première possibilité consiste à injecter un matériau thermoformable autour du composant électronique; ce procédé nécessite un outillage d'injection onéreux et rencontre des difficultés pour placer correctement le composant électronique à l'intérieur du support. D'autre part, dans les cas où le composant électronique est relié à un autre composant ou à une bobine, la pression importante exercée par le produit injecté peut rompre les fils de liaison très fins reliant ces éléments.

Selon un autre procédé, le composant est disposé entre deux feuilles thermoplastiques qui sont ensuite laminées; bien que ledit composant ait une épaisseur assez faible, généralement inférieure à 0,5 mm, il est difficile d'obtenir une carte ayant deux faces absolument planes et parallèles, un léger renflement subsistant toujours à l'endroit où le composant est disposé. Afin de remédier à cet inconvénient, il a été proposé de disposer tout d'abord le composant à l'intérieur d'une découpe effectuée dans une feuille thermoplastique d'épaisseur approximativement égale à celle du composant, puis de laminer cet assemblage entre deux autres feuilles thermoplastiques. En raison de sa complexité, ce dernier procédé est finalement onéreux, et de plus, à cause des tolérances dimensionnelles nécessaires entre la découpe et les dimensions du composant, résultant en une région ou une ligne vide entre ces éléments, on peut obtenir finalement des régions ou lignes en creux sur les faces principales du support.

La demande EP-A-0.128.822 présente un procédé par lequel un circuit électronique encapsulé, comportant au moins une face plane munie de contacts électriques pour un accès ultérieur à un dispositif de lecture/écriture de données est incrusté dans une plaque en un matériau plastique, ladite plaque étant ramollie localement pour permettre l'enfoncement du circuit à l'intérieur de la plaque. Un inconvénient majeur de ce procédé est que le matériau constituant la plaque n'est pas compressible et qu'un renflement est créé sur sa face opposée après que le circuit y ait été enfoncé, renflement nécessitant au moins une opération ultérieure pour son élimination, Selon une autre forme d'exécution du procédé, un logement creux est prévu dans la plaque pour y introduire le circuit, l'espace creux restant dans la plaque après que le circuit y ait été introduit étant ensuite rempli d'un matériau de remplissage. Ce procédé est finalement assez complexe, nécessitant de nombreuses opérations, plusieurs matériaux en présence et créant plusieurs surfaces de transition entre matériaux.

La demande EP-A-0.570.784 décrit un procédé de fabrication où un logement est tout d'abord aménagé dans une plaque qui sera ainsi ensuite utilisée comme structure de positionnement du circuit électronique; le liant sous forme liquide est ensuite introduit afin d'imprégner la plaque juste avant la mise sous presse. L'utilisation d'un produit liquide volatile est un inconvénient dans un processus de fabrication puisqu'il nécessite généralement des moyens importants de ventilation. L'utilisation d'un liant sous forme solide comme proposé en variante nécessite de disposer davantage de couches avant pressage. Ce procédé nécessite donc lui aussi des opérations supplémentaires, préparation du logement, introduction du liant, et comme tout procédé prévoyant un logement pour le circuit électronique, il peut être difficile d'assurer une parfaite planéité des faces principales du module. D'autre part ce procédé est moins universel puisqu'il ne permet pas la fabrication de modules comportant un circuit dont des surfaces de contact affleurent de l'une des faces du module.

La demande WO-A-94/22110, qui est comprise dans l'état de la technique au sens de l'article 54(3) de la CBE, décrit un procédé de fabrication dans lequel la structure de positionnement est compressible et le liant est apporté indépendamment de celle-ci sous forme liquide ou solide.

Un autre inconvénient des procédés de l'art antérieur est qu'ils font appel à des matériaux relativement souples, le support restant souple lorsque le module est terminé. Ceci peut être un inconvénient lorsque le circuit électronique comporte un composant, notamment une bobine ayant des dimensions relativement importantes; par une courbure du module, il est facilement possible de briser la bobine.

Un premier but de l'invention est donc de proposer un procédé d'encapsulage d'un circuit électronique comportant au moins un composant électronique dans ou à la surface d'un support en matériau synthétique ayant la forme d'une plaque et de préférence les dimensions d'une carte de crédit et ne rencontrant pas les inconvénients mentionnés de l'art antérieur, soit permettant d'obtenir un module dont les deux faces principales sont absolument planes et parallèles, ceci par des moyens faciles à utiliser, peu onéreux et ne nécessitant pas une prédécoupe de la ou des feuilles formant support.

Un autre but de l'invention est de proposer un module électronique tel que décrit plus haut, ne possédant pas les défauts mentionnés des modules connus puisque réalisé par le procédé selon l'invention.

Ces différents buts sont obtenus par diverses variantes d'un procédé faisant appel à divers produits de base ayant tous des caractéristiques thermiques et mécaniques semblables, permettant d'obtenir des modules selon plusieurs configurations de circuits électroniques et répondant aux caractéristiques des revendications 1 à 21, ainsi que par un module électronique tel que décrit dans les revendications 22 à 25.

L'invention est plus particulièrement décrite ci-dessous en regard du dessin annexé comportant les figures où:
les figures 1A et 1B représentent des vues en coupe à échelle fortement agrandie de portions de modules électroniques réalisés selon l'un des procédés décrit de l'art antérieur,
la figure 2 représente une vue en coupe d'une portion d'un module électronique en cours de fabrication selon le procédé de l'invention, avant pressage de deux feuilles d'un premier type de matériau formant ultérieurement support,
la figure 3 représente le même module après pressage des deux feuilles formant support,
la figure 4 représente le même module terminé,
la figure 5 représente un module au même stade de fabrication que celui de la figure 2, mais réalisé avec un autre type de feuilles formant support,
la figure 6 représente un module au même stade de fabrication que celui de la figure 2, mais réalisé avec encore un autre type de feuilles formant support,
la figure 7 représente un autre type de module en cours de fabrication,
la figure 8 représente encore un autre type de module en cours de fabrication, et
la figure 9 représente une vue en plan d'une série de différents types de modules en cours de fabrication.

L'invention est réalisée notamment par l'emploi de matériaux particuliers pour former les plaques de support; ces matériaux se caractérisent par le fait qu'ils sont compressibles lorsqu'ils sont soumis à un échauffement et restent sous forme comprimée après refroidissement. On peut utiliser à cet effet deux types de matériaux, un premier type consistant en un matériau préimprégné d'une résine et un deuxième type consistant en un matériau contenant un certain volume de gaz ou d'air. Chacun de ces types de matériaux peut comprendre plusieurs variantes de produits.

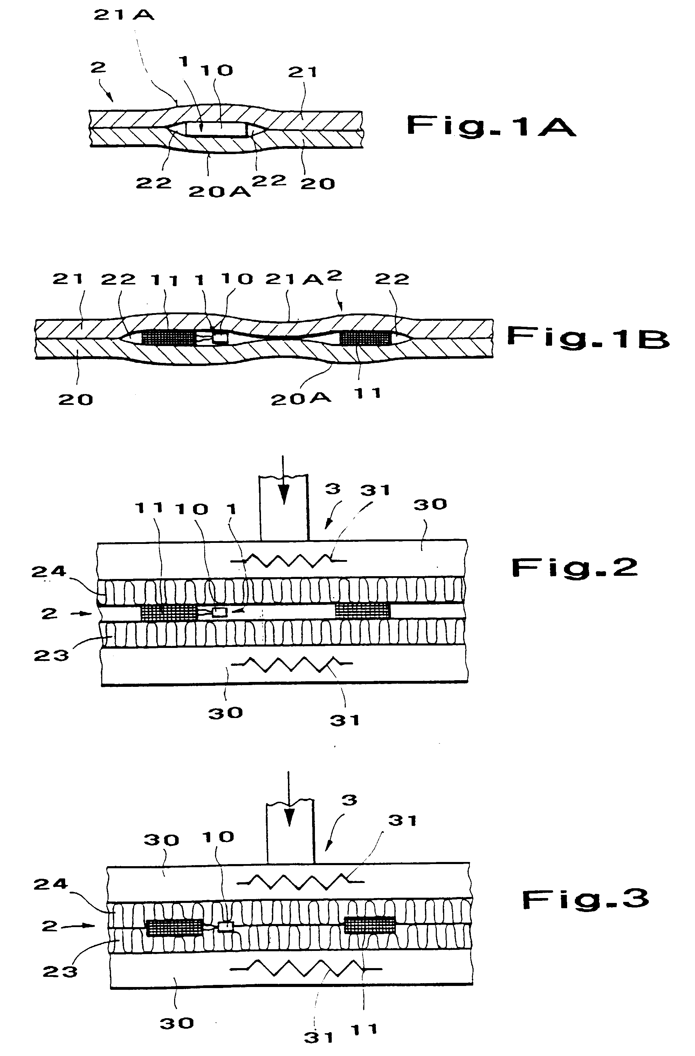

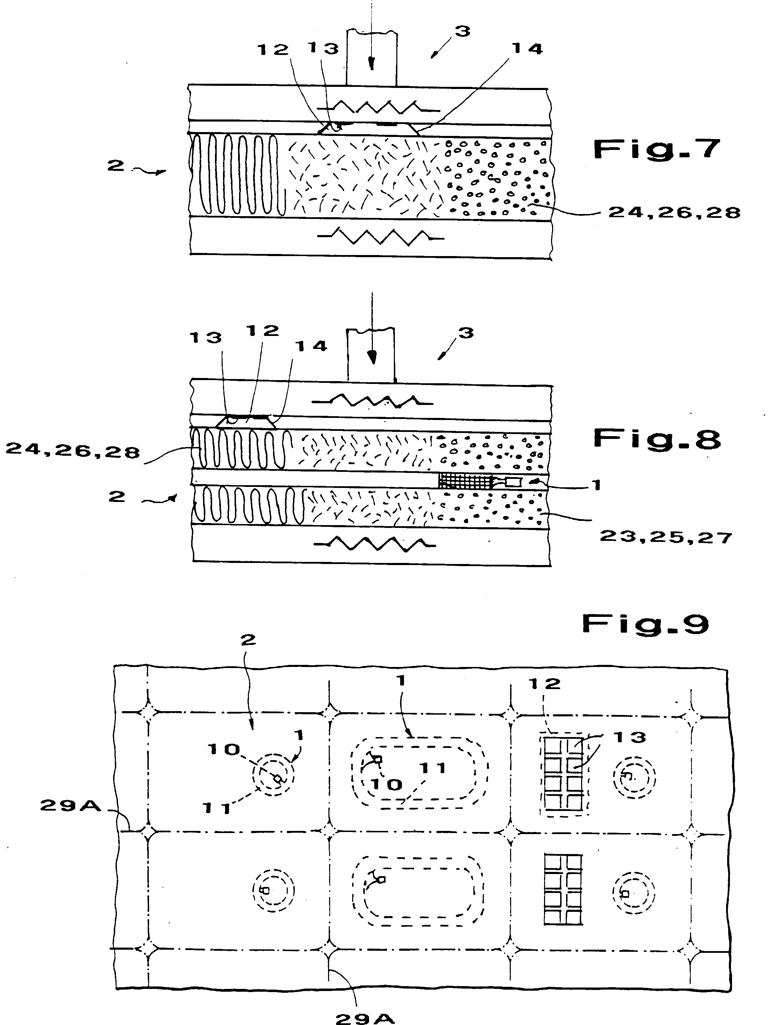

A la figure 1A, qui représente une forme d'exécution de l'art antérieur, le circuit électronique 1 est constitué d'un seul composant 10, par exemple un circuit intégré encapsulé. Le support 2 est composé de deux feuilles en matériau synthétique 20 et 21 qui ont été laminées autour du composant 10. On constate que, vu la faible déformabilité des feuilles 20 et 21 et malgré la pression importante appliquée au laminage, il subsiste un espace vide 22 sur tout le pourtour du composant 10; de plus, et pour les mêmes raisons que ci-dessus, bien que l'épaisseur des feuilles 20 et 21 reste environ constante sur tout le support 2, un léger renflement peut être observé sur les portions de surface 21A et 22A du support 2 proches du composant 10. Le même effet est visible à la figure 1B où le circuit électronique 1 est ici constitué du composant 10, un circuit intégré par exemple, relié à une bobine 11 sous forme de tore. De tels circuits électroniques sont représentés en plan à la figure 9. Dans ce cas, on voit qu'un espace vide 22 subsiste aussi à l'intérieur du tore 11 et qu'en conséquence le renflement concerne des portions de surface 21A et 22A plus importantes du support 2.

La figure 2 montre la première étape de fabrication d'un module électronique selon le procédé de l'invention, utilisant un matériau du premier type décrit plus haut. On a, par exemple, le même circuit électronique 1 constitué d'un composant 10 et d'une bobine 11, vu en coupe. Le circuit électronique 1 est disposé entre deux feuilles 23 et 24, composées d'un produit préimprégné d'une résine. Les deux feuilles 23 et 24 sont constituées d'un produit tissé ou non tissé, de préférence à base de fibre de verre ou de toute autre matière adéquate comme du polyester, préimprégné d'une résine, typiquement une résine époxy, de telle manière que si les feuilles 23 et 24 sont dures et assez rigides à température ambiante, la résine devient très fluide lorsqu'on augmente la température, les feuilles devenant alors relativement molles et déformables. Après être devenue fluide, cette résine est apte à polymériser, soit directement sous l'action de la température, soit lorsqu'un autre additif adéquat lui est ajouté. L'épaisseur totale des deux feuilles 23 et 24 est approximativement égale à l'épaisseur désirée du support 2 à l'état terminé, les deux feuilles étant de préférence de même épaisseur. Comme on le voit sur la figure 2, les deux feuilles 23 et 24 sont placées dans des moyens de pressage/chauffage 3 symbolisés par les deux plaques planes et parallèles 30 munies d'un moyen de chauffage symbolisé par les résistances 31. On doit comprendre ici que n'importe quel moyen idoine de chauffage pourrait être utilisé, par exemple chauffage par résistance, par induction ou circulation d'un fluide chaud. Une faible pression, comprise entre 0,05 et 1 kg/cm², de préférence entre 0,1 et 0,5 kg/cm², est appliquée par les plaques 30, lesquelles sont chauffées afin d'amener la température des feuilles à une température comprise entre 100 et 200 °C, de préférence entre 130 et 150 °C, dépendant principalement du type de résine utilisée. Cette première phase sert principalement à assurer un bon contact thermique entre les plaques de pressage 30 et les feuilles 23 et 24 ainsi qu'à liquéfier la résine d'imprégnation. La pression est ensuite augmentée à une valeur comprise entre 0,5 et 10 kg/cm², de préférence entre 0,7 et 5 kg/cm², la température précédente étant maintenue durant cette deuxième phase, les feuilles 23 et 24 étant maintenues entre 5 minutes et 30 minutes sous ces conditions. Durant cette deuxième phase du procédé, la résine d'imprégnation complètement liquéfiée durant la première phase, tendra donc toujours, sous l'effet de la pression appliquée, à s'écouler depuis un endroit à haute pression vers un endroit à plus faible pression, puis ensuite elle polymérisera. Ainsi et en se référant à la figure 2, la pression maximum est appliquée aux endroits où les feuilles 23 et 24 sont directement en contact avec une portion du circuit électronique 1, la résine liquide s'écoulera donc latéralement depuis ces endroits vers des endroits à plus faible pression, par exemple vers le centre ou l'extérieur de la bobine 11. Vu la durée pendant laquelle la pression est exercée, la matière formant la base des feuilles 23 et 24 est légèrement comprimée aux endroits où elles sont en contact avec le circuit électronique et épouse les contours du circuit, sans laisser d'espaces vides, jusqu'à ce que les deux faces en regard des feuilles arrivent en contact aux endroits non en contact avec le circuit électronique; cette étape du procédé est représentée à la figure 3. A ce moment, le liquide s'est réparti uniformément dans tout le support 2 puis a commencé à polymériser, soit directement sous l'action de la température soit à l'aide d'un additif, et il suffit ensuite d'écarter les plaques de pressage/chauffage 30 pour obtenir un support 2 rigide contenant un circuit électronique 1. Selon le type de résine utilisée, on obtient un produit de type duroplastique qui, après polymérisation, est rigide à haute température et pour lequel il n'est pas nécessaire de conduire une phase spéciale de refroidissement ou alors un produit de type thermoplastique pour lequel il est nécessaire de conduire une phase de refroidissement contrôlé avant de le sortir des plaques de pressage/chauffage.

Selon une variante du procédé, il est possible de s'affranchir de la première étape servant à assurer le bon contact thermique, en appliquant directement la pression de valeur plus élevée, soit celle comprise entre 0,5 et 10 kg /cm², sous une température comprise entre 100 et 200 °C.

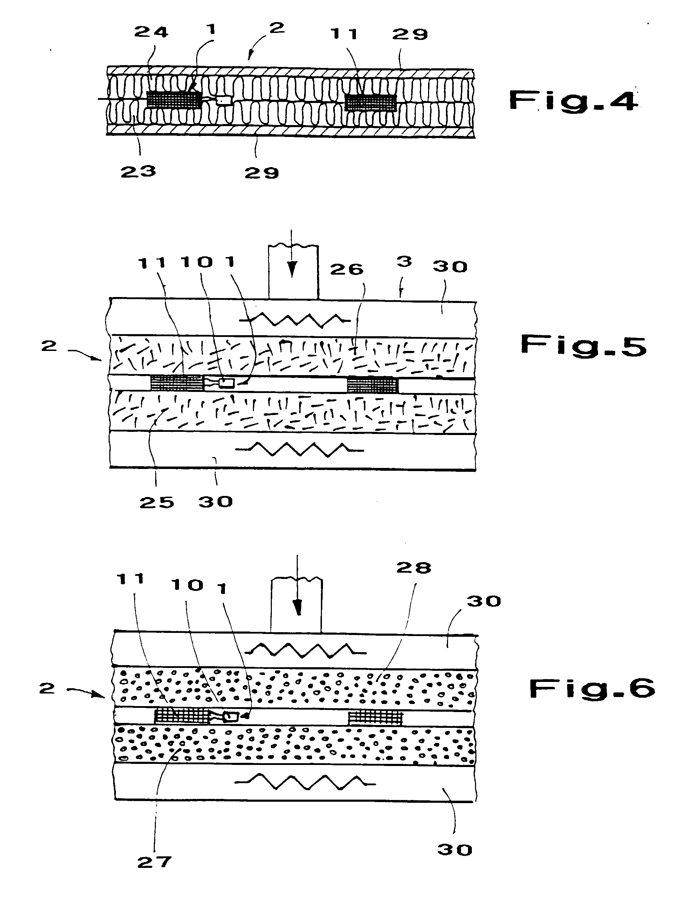

Après retrait des plaques de pression 30, le dispositif est comme représenté à la figure 4 où on voit que les deux feuilles 23 et 24 ont entouré entièrement le circuit 1, ne laissant subsister en principe aucun espace vide. Ceci a été possible vu la capacité des feuilles 23 et 24 de se déformer et d'épouser le contour du circuit 1 sous l'effet de la température et de la pression appliquée, cette déformation demeurant après suppression de la pression. De cette manière, les deux faces principales externes du support 2 sont absolument planes et parallèles, sans renflement. Selon les besoins, il est aussi possible de disposer encore au moins une couche externe 29 sur une ou sur les deux faces principales du support 2, cette ou ces couches 29 pouvant être d'origine sur les feuilles 23 et/ou 24 ou alors déposée par laminage ou par tout autre procédé convenable sur le support terminé. Une impression peut encore être déposée sur l'une ou les deux faces principales du module.

En variante du produit du premier type décrit précédemment, on peut aussi avoir des feuilles 23 et 24 constituées d'un feutre à base de fibres de polyester ou d'une mousse, préimprégnées d'une résine. Généralement ce produit est de type thermoplastique, les feuilles étant relativement molles, même à basse température, lorsque la résine n'est pas polymérisée. Le déroulement du procédé de fabrication des modules est semblable à celui décrit plus haut, si ce n'est qu'une diminution d'épaisseur est imposée aux feuilles 23 et 24 afin d'amener le support 2 à l'épaisseur désirée comme représenté sur les figures 3 et 4. En général, lors de l'emploi de produits de type thermoplastique ou constitués d'un feutre ou d'une mousse, le support 2 présente des micro-cavités après polymérisation. On peut alors procéder à une imprégnation supplémentaire du support 2, à l'aide d'un produit à très faible viscosité, afin d'améliorer l'étanchéité du support et/ou d'augmenter sa rigidité.

Le procédé a été décrit réalisé à l'aide de deux feuilles 23 et 24 du même matériau et imprégnées de la même résine; il est tout aussi possible d'avoir une feuille 23 en un matériau imprégné d'une première résine alors que la feuille 24, du même matériau ou non que celui de la feuille 23, peut être imprégnée d'une autre résine, par exemple un durcisseur réagissant avec la première afin de conduire la polymérisation.

La figure 5 illustre l'application du procédé à des feuilles 25 et 26 constituées d'un produit du deuxième type mentionné précédemment, soit d'un feutre incluant une certaine quantité d'un gaz, de préférence de l'air. Le feutre est constitué de fibres synthétiques ou naturelles chacune desdites fibres étant enrobée d'un matériau thermoplastique, laissant ainsi subsister une quantité non négligeable d'air entre elles. Comme on le voit sur la figure, le circuit 1 est introduit de la même manière que précédemment entre les deux feuilles 25 et 26, lesquelles sont placées dans le dispositif de pressage/chauffage 3. Une pression comprise entre 1 et 5 kg/cm², de préférence entre 3 et 4 kg/cm² est appliquée, la température des feuilles étant amenée à une valeur comprise entre 100 et 200 °C, de préférence entre 120 et 140 °C. La durée de cette application de pression sous température peut être de 1 à 5 minutes, dépendant essentiellement de la capacité thermique des plaques 30. Durant cette première phase du procédé, les enrobages thermoplastiques des fibres sont amenés à se ramollir. Une deuxième phase du procédé est alors conduite, en appliquant une pression supérieure, comprise entre 2 et 10 kg/cm², de préférence entre 3 et 6 kg/cm², les plaques 30 étant alors refroidies. Durant cette phase, les enrobages des fibres étant ramollis, les fibres peuvent se rapprocher, l'air contenu entre elles étant alors mis sous pression, le refroidissement intervenant pour figer à nouveau les fibres par leur enrobage, à nouveau durci, l'épaisseur totale des deux feuilles 25 et 26 correspondant alors à une valeur désirée. La diminution d'épaisseur des feuilles est très rapide dès application de la pression supérieure, cette deuxième phase du procédé durant entre 10 et 30 secondes. De préférence, la deuxième phase du procédé est conduite sur une autre presse que celle utilisée pour la première phase, vu la difficulté à refroidir très rapidement les plaques 30. Les plaques utilisées pour cette deuxième phase peuvent être relativement massives afin de ne pas monter excessivement en température lorsque les feuilles 25 et 26 chaudes y sont introduites ou alors peuvent comprendre des moyens de refroidissement propres de technique connue. Lorsque le support 2 constitué par l'assemblage des deux feuilles 25 et 26 contenant le circuit électronique 1, refroidi et rigide est sorti de la deuxième presse, l'air comprimé contenu entre les fibres peut s'échapper vu la communication des interstices entre les fibres, de manière à se rétablir à la pression normale. Le support 2 comprend donc des fibres davantage comprimées à proximité du circuit 1, et des fibres moins comprimées dans le reste du support, mais présente néanmoins deux faces principales absolument planes et parallèles, sans présenter un espace vide aux alentours du circuit. Comme précédemment une opération d'injection d'un produit à faible viscosité peut être menée afin de remplir les interstices entre fibres. En variante ou en complément à cette dernière opération, une ou les deux faces planes du support 2 peuvent être recouvertes d'une couche extérieure par laminage ou par tout autre procédé convenable.

A la figure 6 on voit l'application du procédé à une autre variante d'un matériau du deuxième type mentionné précédemment. Dans ce cas, les feuilles 27 et 28 sont constituées de deux feuilles de polystyrène expansées, le volume desdites feuilles étant constitué entre 10 et 50 %, de préférence environ 30 %, de bulles de gaz ou d'air contenues dans le polystyrène. Lorsque les deux feuilles 27 et 28 ont été disposées l'une sur l'autre, enfermant le ou les circuits 1, une première pression comprise entre 1 et 5 kg/cm², de préférence environ 4 kg/cm², est appliquée par les plaques 30 durant une période de 30 secondes à 5 minutes, de préférence 1 minute, sous une température de 100 à 200 °C, de préférence de 120 à 130 °C. Durant l'application de cette première pression sous haute température, le polyester se ramollit. Comme précédemment une deuxième phase est conduite, avec une application d'une pression plus élevée, entre 2 et 10 kg/cm², de préférence environ 5 kg/cm², les plaques 30 étant alors froides. Cette deuxième application de pression, sur le même dispositif de pressage ou sur un autre dispositif, permet de régler l'épaisseur de l'assemblage des deux feuilles 23 et 24 à une valeur déterminée par compression des bulles de gaz ou d'air. Après refroidissement, les bulles fermées restent en surpression, étant maintenues par l'entourage de polystyrène. La pression interne des bulles est plus élevée aux endroits proches du circuit 1 que sur le reste du support. Vu que les bulles gazeuses sont fermées, l'étanchéité du support 2 est obtenue sans qu'il soit nécessaire d'y injecter un produit à faible viscosité. Un ou des revêtements extérieurs peuvent encore être appliqués sur le support 2.

Les mêmes matériaux que décrits ci dessus, utilisés selon les procédés correspondants, permettent aussi d'obtenir des modules munis d'au moins un circuit électronique monté dans un boîtier ou encapsulé, du type ayant au moins une face plane sur laquelle on trouve une ou plusieurs pistes métalliques lesquelles affleurent l'une des surfaces principales du module, permettant ultérieurement un échange de données par établissement d'un contact électrique desdites pistes avec un dispositif électronique adéquat.

La figure 7 montre une feuille 24, 26 ou 28 de l'un des matériaux vus plus haut, sur laquelle a été disposé un boîtier de circuit 12 comportant des pistes métalliques 13. La feuille et le boîtier sont disposés dans un dispositif de pressage/chauffage 3 et les opérations d'application de pressions et de températures sont ensuite conduites de la même manière que ci-dessus, en fonction du type de feuille 24, 26 ou 28 prévue, le boîtier 12 s'enfonçant alors dans la feuille ramollie jusqu'à ce que sa surface supérieure plane comportant les pistes métalliques 13 arrive au niveau de la surface supérieure de la feuille, celle-ci ayant été amenée à l'épaisseur désirée. De préférence le boîtier 12 comporte des moyens d'accrochage au support 2, afin d'éviter l'expulsion dudit boîtier lors d'un pliage du module 2. Les moyens d'accrochage 14 sont représentés ici par des faces latérales du boîtier 12 inclinées, de manière à ce que lorsque la matière constituant la feuille 24, 26 ou 28 est ramollie, de la matière puisse venir entourer et recouvrir ces faces inclinées afin de bloquer le boîtier 12 en position. D'autres moyens de retenue peuvent être prévus, par exemple la formation d'une rainure sur les faces latérales, comme décrit dans la demande EP-A-0.326.822 ou alors en prévoyant des trous dans le boîtier 12, lesdits trous se remplissant de matière lors de l'application de la pression, comme décrit dans la demande EP-A-0.128.822. Il est aussi possible de déposer une couche adhésive sur le fond du boîtier 12, cette couche adhésive maintenant le boîtier en place.

On peut aussi, comme on le voit à la figure 8, combiner sur un seul support 2 un ou plusieurs circuits 1 inclus entre deux feuilles 23,24; 25,26 ou 27;28 constituées de l'un ou l'autre des matériaux décrits plus haut, avec un ou plusieurs boîtiers 12 dont les pistes métalliques doivent affleurer l'une des faces principales du support 2. Comme précédemment, les détails du procédé de fabrication sont déterminés selon le matériau choisi pour les feuilles.

Pour la réalisation de l'un ou l'autre des procédés décrits ci-dessus, on dispose généralement une pluralité de circuits 1 sur la feuille de fond 23, 25 ou 27, les circuits 1 étant régulièrement disposés, comme on le voit à la figure 9, selon une trame correspondant aux dimensions des modules ou des supports 2 tels qu'ils seront découpés ultérieurement. Il est aisé de disposer les circuits 1 sur la feuille de fond, manuellement ou par des moyens mécaniques, de préférence automatiques, vu que la surface supérieure de ladite feuille est légèrement collante de par la présence de la résine dont elle est imprégnée. Dans les cas où cette surface n'est pas collante, un trait de colle appliqué sur ladite surface permet d'y maintenir les circuits 1. La feuille supérieure 24, 26 ou 28 est ensuite déposée puis les opérations de pressage et de polymérisation ou de durcissement sont effectuées comme décrites précédemment. On obtient ainsi une grande plaque rigide dont une ou les deux faces sont déjà ou peuvent être recouvertes de la ou des couches supplémentaires 29. Une dernière opération consiste à découper cette plaque, le long des lignes de coupe 29A, selon une technique connue, par exemple à l'aide d'un fin jet d'eau sous pression, aux dimensions désirées pour chaque module, par exemple selon les dimensions d'une carte de crédit (environ 86 x 54 mm) ou selon toutes autres dimensions désirées. Le module terminé peut ne comporter qu'un seul circuit électronique 1 ou alors plusieurs circuits, identiques ou différents, pouvant être éventuellement connectés entre eux. La portion de gauche de la figure montre des circuits 1 comprenant notamment un composant 10 relié à un bobinage de forme circulaire 11, alors que dans la portion centrale le bobinage est de forme différente et que sur la portion de droite on voit que des boîtiers 12 ont été ajoutés; il est bien évident qu'une plaque en cet état de fabrication ne comporte de préférence qu'un seul type de circuit ou de combinaison de circuits, trois types ayant été représentés ici sur la même plaque à titre d'illustration.

Au lieu d'une plaque comme indiqué ci-dessus, il est aussi possible de prévoir les feuilles 23, 24; 25, 26; 27, 28 sous forme de bandes les circuits étant disposés en ligne sur ces bandes ou alors chaque feuille peut être prédécoupée au format désiré du module 2, avant d'être introduite dans le dispositif de pressage, étant même possible en variante que le dispositif de pressage soit directement muni de moyens de découpe permettant d'effectuer la découpe au format désiré alors que les feuilles sont à l'état mou.

Les opérations de pressage décrites ci-dessus, pour l'un ou l'autre des matériaux envisagés, peuvent être faites à l'aide d'un dispositif disposé sous la pression ambiante ou alors monté sous une enceinte étanche sous laquelle on procède à un vide plus ou moins poussé ou alors à un remplissage par un gaz neutre. De même, au-lieu de plaques de pressage la pression peut être appliquée, dans l'une ou l'autre des phases de fabrication décrites, par des moyens à rouleaux.

Ainsi, par les matériaux proposés, utilisés chacun en relation avec le procédé correspondant, il est possible d'obtenir un module de n'importe quelles dimensions, comportant un ou plusieurs circuits électroniques et présentant deux faces principales absolument planes et parallèles. Un autre avantage provenant des matériaux utilisés, notamment de leur rigidité après pressage ou polymérisation, est que le ou les circuits électroniques sont bien enrobés dans un matériau rigide, ce qui leur assure une protection mécanique efficace, notamment par exemple pour les circuits comportant une bobine de grande dimension.

## Revendications

1. Procédé de réalisation d'un module électronique constitué d'au moins un circuit électronique (1) encapsulé dans un support en matériau synthétique (2), ledit support présentant deux faces principales essentiellement planes et parallèles, dans lequel
au moins un circuit électronique (1) est disposé sur une première feuille (23) en un premier matériau préimprégné d'un premier produit d'imprégnation, une deuxième feuille (24) en un deuxième matériau préimprégné d'un deuxième produit d'imprégnation étant disposée par-dessus ladite première feuille et ledit ou lesdits circuits électroniques (1); lesdites feuilles étant faites d'un matériau déformable et compressible à chaud subissent ensuite une pression selon une valeur déterminée accompagnée d'un échauffement à une température déterminée, conduisant à la déformation desdites feuilles et à la liquéfaction des produits d'imprégnation, l'encapsulage dudit ou desdits circuits électroniques (1) entre les deux dites feuilles (23,24) comprimées étant obtenu lors de la rigidification des deux dites feuilles lors de la polymérisation des produits d'imprégnation.

2. Procédé de réalisation d'un module électronique constitué d'au moins un circuit électronique disposé dans un boîtier (12), incrusté dans un support en matériau synthétique (2), ledit support présentant deux faces principales essentiellement planes et parallèles, ledit boîtier présentant une face plane comportant au moins une piste de contact (13), ladite piste de contact étant à fleur de l'une des faces principales dudit support, dans lequel
au moins un boîtier électronique (12) est disposé sur une feuille (24) en un matériau préimprégné d'un produit d'imprégnation, ladite feuille étant faite d'un matériau déformable et compressible à chaud, la face du ou des boîtiers (12) opposée à celle comportant la ou les pistes de contact (13) étant tournée vers ladite feuille; le ou les boîtiers et ladite feuille subissent ensuite une pression selon une valeur déterminée accompagnée d'un échauffement à une température déterminée conduisant à la déformation de ladite feuille et à la liquéfaction du produit d'imprégnation, l'incrustation dudit ou desdits boîtiers (12) dans ladite feuille comprimée (24) étant obtenue lors de la rigidification de ladite feuille lors de la polymérisation du produit d'imprégnation.

3. Procédé de réalisation d'un module électronique constitué d'au moins un circuit électronique (1) encapsulé dans un support en matériau synthétique (2), ledit support présentant deux faces principales essentiellement planes et parallèles, et d'au moins un autre circuit électronique disposé dans un boîtier (12), incrusté dans ledit support en matériau synthétique (2), ledit boîtier présentant une face plane comportant au moins une piste de contact (13), ladite piste de contact étant à fleur de l'une des faces principales dudit support, dans lequel
au moins un circuit électronique (1) est disposé sur une première feuille (23) en un premier matériau préimprégné d'un premier produit d'imprégnation, une deuxième feuille (24) en un deuxième matériau préimprégné d'un deuxième produit d'imprégnation étant disposée par-dessus ladite première feuille et ledit ou lesdits circuits électropiques (1), au moins un boîtier (12) est disposé sur la deuxième feuille (24) la face du ou des boîtiers opposée à celle comportant la ou les pistes de contact (13) étant tournée vers ladite feuille (24); lesdites feuilles (23,24) étant faites d'un matériau déformable et compressible à chaud subissent ensuite une pression selon une valeur déterminée accompagnée d'un échauffement à une température déterminée, conduisant à la déformation desdites feuilles et à la liquéfaction des produiis d'imprégnation, l'encapsulage dudit ou desdits circuits électroniques (1) entre les deux dites feuilles comprimées (23,24) et l'incrustation du boîtier (12) dans l'une desdites feuilles étant obtenus lors de la rigidification desdites feuilles lors de la polymérisation des produits d'imprégnation.

4. Procédé selon l'une des revendications précédentes, caractérisé en ce que l'application de ladite pression de valeur déterminée est précédée d'une autre application de pression, d'une valeur inférieure, accompagnée du même échauffement à la même température déterminée.

5. Procédé selon l'une des revendications précédentes, caractérisé en ce que ladite ou lesdites feuilles (23,24) sont constituées du même matériau, un matériau tissé ou non-tissé, ou de type feutre ou de type mousse.

6. Procédé selon la revendication 5, caractérisé en ce que le premier produit d'imprégnation est une résine et le deuxième produit d'imprégnation est un durcisseur.

7. Procédé selon la revendication 5, caractérisé en ce que le premier produit d'imprégnation est le même que le deuxième produit d'imprégnation.

8. Procédé selon l'une des revendications 1, 2 ou 3, caractérisé en ce que la pression déterminée est comprise entre 0,5 kg/cm² et 10 kg/cm², de préférence entre 0,7 kg/cm² et 5 kg/cm², la température déterminée étant comprise entre 100 °C et 200 °C, de préférence entre 130 °C et 150 °C.

9. Procédé selon la revendication 4, caractérisé en ce que lors de l'autre application de pression, la pression est comprise entre 0,05 kg/cm² et 1 kg/cm².

10. Procédé de réalisation d'un module électronique constitué d'au moins un circuit électronique (1) encapsulé dans un support en matériau synthétique (2), ledit support présentant deux faces principales essentiellement planes et parallèles, dans lequel
au moins un circuit électronique (1) est disposé sur une première feuille (27) en un matériau compressible au moins à chaud constitué d'une matière thermoplastique comprenant une certaine quantité de bulles d'air ou de gaz incluses, une deuxième feuille (28) du même matériau étant disposée par-dessus ladite première feuille et ledit ou lesdits circuits électroniques (1); lesdites feuilles subissent ensuite une première pression selon une première valeur déterminée, accompagnée d'un échauffement à une température déterminée provoquant un ramollissement d'au moins une partie du matériau constituant lesdites feuilles, puis une deuxième pression selon une deuxième valeur déterminée accompagnée d'un refroidissement, ladite deuxième pression provoquant une compression desdites bulles respectivement des feuilles (27,28) du matériau, le refroidissement provoquant le durcissement du matériau à l'état comprimé et l'encapsulement dudit ou desdits circuits électroniques (1) entre les deux dites feuilles.

11. Procédé de réalisation d'un module électronique constitué d'au moins un circuit électronique disposé dans un boîtier (12), incrusté dans un support en matériau synthétique (2), ledit support présentant deux faces principales essentiellement planes et parallèles, ledit boîtier présentant une face plane comportant au moins une piste de contact (13), ladite piste de contact étant à fleur de l'une des faces principales dudit support, dans lequel
au moins un boîtier (12) est disposé sur une feuille (28) en un matériau compressible au moins à chaud constitué d'une matière thermoplastique comprenant une certaine quantité de bulles d'air ou de gaz incluses, la face du ou des boîtiers (12) opposée à celle comportant la ou les pistes de contact (13) étant tournée vers ladite feuille; le ou les boîtiers et ladite feuille subissent ensuite une première pression selon une première valeur déterminée, accompagnée d'un échauffement à une température déterminée, provoquant un ramollissement d'au moins une partie du matériau constituant ladite feuille, puis une deuxième pression selon une deuxième valeur déterminée accompagnée d'un refroidissement, ladite deuxième pression provoquant une compression desdites bulles, respectivement de la feuille (28) du matériau, le refroidissement provoquant le durcissement du matériau à l'état comprimé et l'incrustation dudit ou desdits boîtiers (12) dans ladite feuille.

12. Procédé de réalisation d'un module électronique constitué d'au moins un circuit électronique (1) encapsulé dans un support en matériau synthétique (2), ledit support présentant deux faces principales essentiellement planes et parallèles, et d'au moins un autre circuit électronique disposé dans un boîtier (12) incrusté dans ledit support en matériau synthétique (2), ledit boîtier présentant une face plane comportant au moins une piste de contact (13), ladite piste de contact étant à fleur de l'une des faces principales dudit support, dans lequel
au moins un circuit électronique (1) est disposé sur une première feuille (27) en un matériau compressible au moins à chaud constitué d'une matière thermoplastique comprenant une certaine quantité de bulles d'air ou de gaz incluses, une deuxième feuille (28) du même matériau étant disposée par-dessus ladite première feuille et ledit ou lesdits circuits électroniques (1), au moins un boîtier (12) est disposé sur la deuxième feuille (28) la face du ou des boîtiers opposée à celle comportant la ou les pistes de contact (13) étant tournée vers ladite feuille; lesdites feuilles subissent ensuite une première pression selon une première valeur déterminée, accompagnée d'un échauffement à une température déterminée, provoquant un ramollissement d'au moins une partie du matériau constituant lesdites feuilles, puis une deuxième pression selon une deuxième valeur déterminée accompagnée d'un refroidissement, ladite deuxième pression provoquant une compression desdites bulles, respectivement du matériau desdites feuilles (27,28), le refroidissement provoquant le durcissement du matériau à l'état comprimé et l'encapsulement dudit ou desdits circuits électroniques (1) entre les deux dites feuilles ainsi que l'incrustation dudit ou desdits boîtiers (12) dans l'une desdites feuilles.

13. Procédé de réalisation d'un module électronique constitué d'au moins un circuit électronique (1) encapsulé dans un support en matériau synthétique (2), ledit support présentant deux faces principales essentiellement planes et parallèles, dans lequel
au moins un circuit électronique (1) est disposé sur une première feuille (25) en un matériau compressible au moins à chaud constitué d'un feutre constitué de fibres synthétiques ou naturelles enrobées d'un matériau thermoplastique, une certaine quantité d'air étant incluse entre lesdites fibres, une deuxième feuille (26) du même matériau étant disposée par-dessus ladite première feuille et ledit ou lesdits circuits électroniques (1); lesdites feuilles subissent ensuite une première pression selon une première valeur déterminée, accompagnée d'un échauffement à une température déterminée provoquant un ramollissement des enrobages thermoplastiques desdites fibres, puis une deuxième pression selon une deuxième valeur déterminée accompagnée d'un refroidissement, ladite deuxième pression provoquant un rapprochement desdites fibres, ainsi qu'une compression de l'air inclus respectivement des feuilles (25,26) du matériau, le refroidissement provoquant le durcissement du matériau à l'état comprimé et l'encapsulement dudit ou desdits circuits électroniques (1) entre les deux dites feuilles.

14. Procédé de réalisation d'un module électronique constitué d'au moins un circuit électronique disposé dans un boîtier (12), incrusté dans un support en matériau synthétique (2), ledit support présentant deux faces principales essentiellement planes et parallèles, ledit boîtier présentant une face plane comportant au moins une piste de contact (13), ladite piste de contact étant à fleur de l'une des faces principales dudit support, dans lequel
au moins un boîtier (12) est disposé sur une feuille (26) en un matériau compressible au moins à chaud constitué d'un feutre constitué de fibres synthétiques ou naturelles enrobées d'un matériau thermoplastique, une certaine quantité d'air étant incluse entre lesdites fibres, la face du ou des boîtiers (12) opposée à celle comportant la ou les pistes de contact (13) étant tournée vers ladite feuille; le ou les boîtiers et ladite feuille subissent ensuite une première pression selon une première valeur déterminée, accompagnée d'un échauffement à une température déterminée, provoquant un ramollissement des enrobages thermoplastiques desdites fibres, puis une deuxième pression selon une deuxième valeur déterminée accompagnée d'un refroidissement, ladite deuxième pression provoquant un rapprochement desdites fibres, ainsi qu'une compression de l'air inclus respectivement de la feuille (26) du matériau, le refroidissement provoquant le durcissement du matériau à l'état comprimé et l'incrustation dudit ou desdits boîtiers (12) dans ladite feuille.

15. Procédé de réalisation d'un module électronique constitué d'au moins un circuit électronique (1) encapsulé dans un support en matériau synthétique (2), ledit support présentant deux faces principales essentiellement planes et parallèles, et d'au moins un autre circuit électronique disposé dans un boîtier (12), incrusté dans ledit support en matériau synthétique (2), ledit boîtier présentant une face plane comportant au moins une piste de contact (13), ladite piste de contact étant à fleur de l'une des faces principales dudit support, dans lequel
au moins un circuit électronique (1) est disposé sur une première feuille (25) en un matériau compressible au moins à chaud constitué d'un feutre constitué de fibres synthétiques ou naturelles enrobées d'un matériau thermoplastique, une certaine quantité d'air étant incluse entre lesdites fibres, une deuxième feuille (26) du même matériau étant disposée par-dessus ladite première feuille et ledit ou lesdits circuits électroniques (1), au moins un boîtier (12) est disposé sur la deuxième feuille (26) la face du ou des boîtiers opposée à celle comportant la ou les pistes de contact (13) étant tournée vers ladite feuille; lesdites feuilles subissent ensuite une première pression selon une première valeur déterminée, accompagnée d'un échauffement à une température déterminée, provoquant un ramollissement des enrobages thermoplastiques desdites fibres puis une deuxième pression selon une deuxième valeur déterminée accompagnée d'un refroidissement, ladite deuxième pression provoquant un rapprochement desdites fibres, ainsi qu'une compression de l'air inclus respectivement des feuilles (25,26) du matériau, le refroidissement provoquant le durcissement du matériau à l'état comprimé et l'encapsulement dudit ou desdits circuits électroniques (1) entre les deux dites feuilles, ainsi que l'incrustation dudit ou desdits boîtiers (12) dans l'une desdites feuilles.

16. Procédé selon l'une des revendications 10 à 15, caractérisé en ce que la première pression est comprise entre 1 kg/cm² et 5 kg/cm², de préférence entre 3 kg/cm² et 4 kg/cm², la première température est comprise entre 100 °C et 200 °C et la deuxième pression est comprise entre 1 kg/cm² et 10 kg/cm², de préférence entre 3 kg/cm² et 6 kg/cm².

17. Procédé selon la revendication 16, caractérisé en ce que la première application de pression et la deuxième application de pression sont effectuées par des moyens d'application de pression (3) différents.

18. Procédé selon l'une des revendications précédentes, caractérisé en ce que les moyens d'application de pression (3) sont constitués de deux plaques planes et parallèles (30) munies de moyens de chauffage/refroidissement (31).

19. Procédé selon l'une des revendications précédentes, caractérisé en ce qu'une opération d'imprégnation d'un produit à faible viscosité est effectuée après le refroidissement de la ou des feuilles.

20. Procédé selon l'une des revendications précédentes, caractérisé en ce qu'au moins l'une desdites faces principales du module est recouverte d'une couche supplémentaire (29) en matériau synthétique.

21. Procédé selon l'une des revendications précédentes, caractérisé en ce que la plaque rigide obtenue après polymérisation ou durcissement est ensuite découpée en modules selon un format déterminé, notamment le format d'une carte de crédit, chacun desdits modules comportant au moins un circuit électronique (1,12).

22. Module électronique constitué d'un support (2) en matériau synthétique comportant deux faces principales essentiellement planes et parallèles et comprenant au moins un circuit électronique (1,12), ledit module étant découpé selon un format déterminé, notamment le format d'une carte de crédit, ledit module étant réalisé selon le procédé de l'une des revendications précédentes, caractérisé en ce que ledit support (2) est réalisé à partir d'au moins une feuille (23,24;25,26,27,28) étant faite d'un matériau déformable et compressible à chaud ou d'une matière thermoplastique comprenant une certaine quantité de bulles d'air ou de gaz incluses et ne présentant aucune découpe ou ouverture, les deux faces planes et parallèles dudit support ne présentant aucun renflement ou aspérité à l'endroit où est disposé ledit circuit.

23. Module électronique selon la revendication 22, caractérisé en ce qu'au moins un circuit électronique est constitué d'un composant électronique (10) relié à une bobine (11), ledit circuit étant entièrement encapsulé à l'intérieur du support (2).

24. Module électronique selon l'une des revendications 22 ou 23, caractérisé en ce qu'au moins un circuit électronique comprend un boîtier (12) présentant une face plane munie d'au moins une piste de contact (13), ledit boîtier étant incrusté dans ledit support, ladite ou lesdites pistes de contact étant à fleur de l'une desdites faces principales.

25. Module électronique selon la revendication 24, caractérisé en ce que le boîtier (12) comprend des moyens d'accrochage (14) permettant sa fixation dans ledit support 82).

## Patentansprüche

1. Verfahren zur Herstellung eines elektronischen Bausteines, der aus mindestens einer elektronischen Schaltung (1) besteht, welche in einem Halter aus synthetischem Material (2) eingekapselt ist, wobei dieser Halter zwei im wesentlichen ebene, parallele Hauptseiten aufweist, bei welchem
zumindest eine elektronische Schaltung (1) auf einer ersten Folie (23) aus einem ersten, mit einem ersten Imprägnierungsmittel vorimprägnierten Material, angebracht ist, wobei eine zweite Folie (24) aus einem zweiten, mit einem zweiten lmprägnierungsmittel vorimprägnierten Material, auf der ersten Folie und der oder den elektronischen Schaltung(en) (1) angebracht ist, wobei besagte Folien aus einem heißverformbaren und -verdichtbaren Material bestehen und danach einem Druck mit festgelegtem Wert zusammen mit einer Erwärmung auf eine vorbestimmte Temperatur ausgesetzt werden, was zur Verformung der erwähnten Folien und Verflüssigung der lmprägnierungsmittel führt und wobei die Verkapselung der erwähnten, elektronischen Schaltung(en)(1) zwischen beiden, komprimierten Folien (23, 24) bei der Erstarrung der beiden Folien, als die lmprägnierungsmittel polymerisieren, erreicht wird.

2. Verfahren zur Herstellung eines elektronischen Bausteines, der aus mindestens einer elektronischen Schaltung besteht, welche in einem Gehäuse (12) untergebracht ist, das in einem Halter aus synthetischem Material (2) eingebettet ist, wobei dieser Halter zwei im wesentlichen ebene, parallele Hauptseiten und das Gehäuse eine ebene Seite aufweist, die mit zumindest einer Kontaktspur (13) versehen ist, welche mit einer der Hauptseiten des Halters fluchtet, bei welchem
zumindest ein elektronisches Gehäuse (12) auf einer Folie (24) aus einem Material, das mit einem lmprägnierungsmittel vorimprägniert ist, angebracht ist, wobei besagte Folie aus einem heißverformbaren und - verdichtbaren Material besteht und diejenige Seite des Gehäuses oder der Gehäuse (12), welche der Seite mit der Kontaktspur oder den Kontaktspuren (13) gegenübersteht, dieser Folie zugewendet ist; danach werden das oder die Gehäuse und die Folie einem Druck mit festgelegtem Wert zusammen mit einer Erwärmung auf eine vorbestimmte Temperatur ausgesetzt, was zur Verformung der erwähnten Folie und Verflüssigung des lmprägnierungsmittels führt, wobei die Einbettung des oder der erwähnten Gehäuse(s) (12) in die komprimierte Folie (24) bei der Erstarrung der Folie, als das lmprägnierungsmittel polymerisiert, erreicht wird.

3. Verfahren zur Herstellung eines elektronischen Bausteines, der aus mindestens einer elektronischen Schaltung (1), welche in einem Halter aus synthetischem Material (2) eingekapselt ist, wobei dieser Halter zwei im wesentlichen ebene, parallele Hauptseiten aufweist, sowie zumindest einer weiteren, elektronischen Schaltung besteht, welche sich in einem Gehäuse (12) befindet, das in dem aus synthetischem Material bestehenden Halter (2) eingebettet ist, wobei das Gehäuse eine ebene Seite aufweist, die mit zumindest einer Kontaktspur (13) versehen ist, welche mit einer der Hauptseiten des Halters fluchtet, bei welchem
zumindest eine elektronische Schaltung (1) auf einer ersten Folie (23) aus einem ersten, mit einem ersten lmprägnierungsmittel vorimprägnierten Material, angebracht ist, eine zweite Folie (24) aus einem zweiten, mit einem zweiten lmprägnierungsmittel vorimprägnierten Material, auf der ersten Folie und der oder den elektronischen Schaltung(en) (1) und zumindest ein Gehäuse (12) auf der zweiten Folie (24) angebracht ist, wobei diejenige Seite des Gehäuses oder der Gehäuse, welche der Seite mit der Kontaktspur oder den Kontaktspuren (13) gegenübersteht, dieser Folie (24) zugewendet ist, wobei besagte Folien (23, 24) aus einem heißverformbaren und -verdichtbaren Material bestehen und danach einem Druck mit festgelegtem Wert zusammen mit einer Erwärmung auf eine vorbestimmte Temperatur ausgesetzt werden, was zur Verformung der erwähnten Folien und Verflüssigung der lmprägnierungsmittel führt, und wobei die Verkapselung der erwähnten, elektronischen Schaltung (en) (1) zwischen beiden, komprimierten Folien (23, 24) und die Einbettung des Gehäuses (12) in eine der Folien bei der Erstarrung der Folien, als die lmprägnierungsmittel polymerisieren, erreicht wird.

4. Verfahren nach einem der vorhergehenden Ansprüche, dadurch gekennzeichnet, daß der Ausübung besagten Druckes mit bestimmten Wert die Ausübung eines anderen Druckes niedrigeren Wertes vorausgeht, die von der gleichen Erwärmung auf die gleiche, bestimmte Temperatur begleitet wird.

5. Verfahren nach einem der vorhergehenden Ansprüche, dadurch gekennzeichnet daß besagte Folie oder Folien (23, 24) aus dem gleichen Material bestehen, einem gewebten oder nichtgewebten Material oder des Filz- oder Schaumtyps.

6. Verfahren nach Anspruch 5, dadurch gekennzeichnet, daß das erste Imprägnierungsmittel ein Harz, das zweite lmprägnierungsmittel ein Härtungsmittel ist.

7. Verfahren nach Anspruch 5, dadurch gekennzeichnet, daß das erste und das zweite Imprägnierungsmittel identisch sind.

8. Verfahren nach einem der Ansprüche 1, 2 und 3, dadurch gekennzeichnet, daß der bestimmte Druck zwischen 0,5 kg/cm² und 10 kg/cm², vorzugsweise zwischen 0,7 kg/cm² und 5 kg/cm² beträgt, wobei die bestimmte Temperatur zwischen 100 °C und 200 °C, vorzugsweise zwischen 130 °C und 150 °C liegt.

9. Verfahren nach Anspruch 4, dadurch gekennzeichnet, daß bei dem anderen Druckanlegen der Druck zwischen 0,05 kg/cm² und 1 kg/cm² beträgt.

10. Verfahren zur Herstellung eines elektronischen Bausteines, der aus mindestens einer elektronischen Schaltung (1) besteht, welche in einem Halter aus synthetischem Material (2) eingekapselt ist, wobei dieser Halter zwei im wesentlichen ebene, parallele Hauptseiten aufweist, bei welchem
zumindest eine elektronische Schaltung (1) auf einer ersten Folie (27) aus einem zumindest im heißen Zustand verdichtbaren Material angebracht ist, das aus einem thermoplastischen Material besteht, das eine gewisse Menge an Luft- oder Gasblasen-Einschlüßen aufweist, wobei eine zweite Folie (28) aus dem gleichen Material auf der ersten Folie und der elektronischen Schaltung oder den elektronischen Schaltungen (1) liegt und die Folien danach einem ersten, von einer Erwärmung auf eine bestimmte Temperatur, die zumindest einen Teil des Materials der Folien aufweicht, begleiteten Druck gemäß einem ersten, bestimmten Wert, danach einem zweiten, von einer Abkühlung begleiteten Druck gemäß einem zweiten Wert ausgesetzt werden, wobei dieser zweite Druck eine Komprimierung der Blasen und der Folien (27, 28) des Materials und die Abkühlung das Härten des Materials im komprimierten Zustand sowie die Einkapselung der elektronischen Schaltung(en) (1) zwischen den beiden Folien bewirkt.

11. Verfahren zur Herstellung eines elektronischen Bausteines, der aus mindestens einer elektronischen Schaltung besteht, welche in einem Gehäuse (12) untergebracht ist, das in einem Halter aus synthetischem Material (2) eingebettet ist, wobei dieser Halter zwei im wesentlichen ebene, parallele Hauptseiten und das Gehäuse eine ebene Seite aufweist, die mit zumindest einer Kontaktspur (13) versehen ist, welche mit einer der Hauptseiten des Halters fluchtet, bei welchem
zumindest ein Gehäuse (12) auf einer Folie (28) aus einem Material, das zumindest im heißen Zustand komprimierbar ist und aus einem thermoplastischen Material, das eine gewisse Menge an Luft- oder Gasblasen als Einschlüße enthält, wobei diejenige Seite des Gehäuses oder der Gehäuse (12), die der Seite mit der Kontaktspur oder den Kontaktspuren (13) gegenübersteht, zu besagter Folie gewendet ist, das oder die Gehäuse und die Folie danach einem ersten, von einer Erwärmung auf eine bestimmte Temperatur, die zumindest einen Teil des Materials der Folie aufweicht, begleiteten Druck gemäß einem ersten, bestimmten Wert, danach einem zweiten, von einer Abkühlung begleiteten Druck gemäß einem zweiten Wert ausgesetzt werden, wobei dieser zweite Druck eine Komprimierung der Blasen und der Folie (28) des Materials und die Abkühlung das Härten des Materials im komprimierten Zustand sowie die Einbettung des Gehäuses oder der Gehäuse (12) in die Folie bewirkt.

12. Verfahren zur Herstellung eines elektronischen Bausteines, der aus mindestens einer elektronischen Schaltung (1), welche in einem Halter aus synthetischem Material (2) eingekapselt ist, wobei dieser Halter zwei im wesentlichen ebene, parallele Hauptseiten aufweist, sowie zumindest einer weiteren, elektronischen Schaltung besteht, welche sich in einem Gehäuse (12) befindet, das in dem aus synthetischem Material bestehenden Halter (2) eingebettet ist, wobei das Gehäuse eine ebene Seite aufweist, die mit zumindest einer Kontaktspur (13) versehen ist, welche mit einer der Hauptseiten des Halters fluchtet, bei welchem
zumindest eine elektronische Schaltung (1) auf einer ersten Folie (27) aus einem Material, das zumindest im heißen Zustand komprimierbar ist und aus einem thermoplastischen Material, das eine gewisse Menge an Luft- oder Gasblasen als Einschlüße enthält, wobei eine zweite Folie (28) aus dem gleichen Material auf der ersten Folie und der elektronischen Schaltung oder den elektronischen Schaltungen (1) liegt, zumindest ein Gehäuse (12) auf der zweiten Folie (28) angebracht ist, diejenige Seite des Gehäuses oder der Gehäuse, welche der Seite mit der Kontaktspur oder den Kontaktspuren (13) gegenübersteht, dieser Folie zugewendet ist; und die Folien danach einem ersten, von einer Erwärmung auf eine bestimmte Temperatur, die zumindest einen Teil des Materials der Folien aufweicht, begleiteten Druck gemäß einem ersten, bestimmten Wert, danach einem zweiten, von einer Abkühlung begleiteten Druck gemäß einem zweiten Wert ausgesetzt werden, wobei dieser zweite Druck eine Komprimierung der Blasen und des Materials der Folien (27, 28) und die Abkühlung das Härten des Materials im komprimierten Zustand sowie die Einkapselung der elektronischen Schaltung(en) (1) zwischen den beiden Folien sowie die Einbettung des Gehäuses oder der Gehäuse (12) in eine der Folien bewirkt.

13. Verfahren zur Herstellung eines elektronischen Bausteines, der aus mindestens einer elektronischen Schaltung (1), welche in einem Halter aus synthetischem Material (2) eingekapselt ist, wobei dieser Halter zwei im wesentlichen ebene, parallele Hauptseiten aufweist, bei welchem
zumindest eine elektronische Schaltung (1) auf einer ersten Folie (25) aus einem zumindest im heißen Zustand verdichtbaren Material angebracht ist, das aus Filz besteht, welches seinerseits aus synthetischen oder natürlichen Fasern, die mit einem thermoplastischen Material überzogen sind, wobei eine gewisse Luftmenge zwischen diesen Fasern eingeschlossen ist, besteht, eine zweite Folie (26) aus dem gleichen Material auf der ersten Folie und der elektronischen Schaltung oder den elektronischen Schaltungen (1) liegt und die Folien danach einem ersten, von einer Erwärmung auf eine bestimmte Temperatur, die die thermoplastischen Überzüge der Fasern aufweicht, begleiteten Druck gemäß einem ersten, bestimmten Wert, danach einem zweiten, von einer Abkühlung begleiteten Druck gemäß einem zweiten Wert ausgesetzt werden, wobei dieser zweite Druck ein Näherrücken der Fasern sowie eine Komprimierung der eingeschlossenen Luft und der Folien (25, 26) des Materials und die Abkühlung das Härten des Materials im komprimierten Zustand sowie die Einkapselung der elektronischen Schaltung(en) (1) zwischen den beiden Folien bewirkt.

14. Verfahren zur Herstellung eines elektronischen Bausteines, der aus mindestens einer elektronischen Schaltung besteht, die in einem Gehäuse (12) untergebracht ist, welches in einem Halter aus synthetischem Material (2) eingebettet ist, wobei dieser Halter zwei im wesentlichen ebene, parallele Hauptseiten und das Gehäuse eine ebene Seite aufweist, die mit zumindest einer Kontaktspur (13) versehen ist, welche mit einer der Hauptseiten des Halters fluchtet, bei welchem
zumindest ein Gehäuse (12) auf einer Folie (26) aus einem zumindest im heißen Zustand verdichtbaren Material angebracht ist, das aus einem Filz aus synthetischen oder natürlichen Fasern, die mit einem thermoplastischen Material überzogen sind, wobei eine gewisse Luftmenge zwischen diesen Fasern eingeschlossen ist, besteht, diejenige Seite des Gehäuses oder der Gehäuse (12), die derjenigen mit der Kontaktspur oder den Kontaktspuren (13) gegenübersteht, zu der Folie hin gewendet ist; danach werden das Gehäuse oder die Gehäuse und die Folie einem ersten, von einer Erwärmung auf eine bestimmte Temperatur, die die thermoplastischen Überzüge der Fasern aufweicht, begleiteten Druck gemäß einem ersten, bestimmten Wert, danach einem zweiten, von einer Abkühlung begleiteten Druck gemäß einem zweiten Wert ausgesetzt, wobei dieser zweite Druck ein Näherrücken der Fasern sowie eine Verdichtung der eingeschlossenen Luft und der Folie (26) des Materials und die Abkühlung das Härten des Materials im komprimierten Zustand sowie die Einbettung des Gehäuses oder der Gehäuse (12) in die Folie bewirkt.

15. Verfahren zur Herstellung eines elektronischen Bausteines, der aus mindestens einer elektronischen Schaltung (1), welche in einem Halter aus synthetischem Material (2) eingekapselt ist, wobei dieser Halter zwei im wesentlichen ebene, parallele Hauptseiten aufweist, sowie zumindest einer weiteren, elektronischen Schaltung besteht, welche sich in einem Gehäuse (12) befindet, das in dem aus synthetischem Material bestehenden Halter (2) eingebettet ist, wobei das Gehäuse eine ebene Seite aufweist, die mit zumindest einer Kontaktspur (13) versehen ist, welche mit einer der Hauptseiten des Halters fluchtet, bei welchem
zumindest eine elektronische Schaltung (1) auf einer ersten Folie (25) aus einem zumindest im heißen Zustand verdichtbaren Material angebracht ist, das aus einem Filz aus synthetischen oder natürlichen Fasern, die mit einem thermoplastischen Material überzogen sind, wobei eine gewisse Luftmenge zwischen diesen Fasern eingeschlossen ist, besteht, wobei eine zweite Folie (26) aus dem gleichen Material auf der ersten Folie und der oder den elektronischen Schaltungen (1) liegt, zumindest ein Gehäuse (12) auf der zweiten Folie (26) angebracht ist, diejenige Seite des Gehäuses oder der Gehäuse, die derjenigen mit der Kontaktspur oder den Kontaktspuren (13) gegenübersteht, zu der Folie hin gewendet ist und die Folien danach einem ersten, von einer Erwärmung auf eine bestimmte Temperatur, die die thermoplastischen Überzüge der Fasern aufweicht, begleiteten Druck gemäß einem ersten, bestimmten Wert, danach einem zweiten, von einer Abkühlung begleiteten Druck gemäß einem zweiten Wert ausgesetzt werden, wobei dieser zweite Druck ein Näherrücken der Fasern sowie eine Verdichtung der eingeschlossenen Luft und der Folien (25, 26) des Materials, die Abkühlung das Härten des Materials im komprimierten Zustand sowie die Verkapselung der elektronischen Schaltung(en) (1) zwischen den beiden Folien und die Einbettung des Gehäuses oder der Gehäuse (12) in eine der Folien bewirkt.

16. Verfahren nach einem der Ansprüche 10 bis 15, dadurch gekennzeichnet, daß der erste Druck zwischen 1 kg/cm² und 5 kg/cm², vorzugsweise zwischen 3 kg/cm² und 4 kg/cm², die erste Temperatur zwischen 100 °C und 200 °C und der zweite Druck zwischen 1 kg/cm² und 10 kg/cm², vorzugsweise zwischen 3 kg/cm² und 6 kg/cm², liegt.

17. Verfahren nach Anspruch 16, dadurch gekennzeichnet, daß das erste Druckanlegen und das zweite Druckanlegen mit verschiedenen Druckanlegemitteln (3) durchgeführt werden.

18. Verfahren nach einem der vorhergehenden Ansprüche, dadurch gekennzeichnet, daß die Druckanlegemittel (3) aus zwei parallelen, ebenen Platten (30), die mit Mitteln zum Heizen/Kühlen versehen sind, bestehen.

19. Verfahren nach einem der vorhergehenden Ansprüche, dadurch gekennzeichnet, daß ein Imprägnierungs-Arbeitsgang mit einem Produkt niedriger Viskosität nach dem Abkühlen der Folie(n) durchgeführt wird.

20. Verfahren nach einem der vorhergehenden Ansprüche, dadurch gekennzeichnet, daß zumindest eine der erwähnten Hauptseiten des Bausteins mit einer zusätzlichen Schicht (29) aus synthetischem Material bedeckt ist.

21. Verfahren nach einem der vorhergehenden Ansprüche, dadurch gekennzeichnet, daß die nach Polymerisieren oder Härten erhaltene, steife Platte danach nach einem bestimmten Format, insbesondere dem Kreditkartenformat, in Bausteine geschnitten wird, wobei jeder Baustein zumindest eine elektronische Schaltung (1, 12) enthält.

22. Elektronischer Baustein, bestehend aus einem Trägerteil (2) aus synthetischem Material, der zwei im wesentlichen ebene und parallele Hauptseiten aufweist und zumindest eine elektronische Schaltung (1, 12) enthält, wobei besagter Baustein nach einem bestimmten Format, insbesondere dem Kreditkartenformat, geschnitten und nach dem Verfahren eines der vorhergehenden Ansprüche hergestellt wird, dadurch gekennzeichnet, daß der Trägerteil (2) unter Verwendung wenigstens einer Folie (23, 24; 25, 26; 27, 28) aus einem verformbaren, heißverdichtbaren Material oder einem thermoplastischen Material mit einer gewissen Menge eingeschlossener Luft- oder Gasblasen ohne jeglichen Ausschnitt und ohne jegliche Öffnung hergestellt wird, wobei die beiden, ebenen und parallelen Seiten des Trägerteils an der Stelle, an welcher die Schaltung angebracht ist, keinerlei Verdickung oder Unebenheit aufweisen.

23. Elektronischer Baustein nach Anspruch 22, dadurch gekennzeichnet, daß wenigstens eine elektronische Schaltung aus einem elektronischen Bauelement (10), das mit einer Spule (11) verbunden ist, besteht, wobei besagte Schaltung vollständig innerhalb des Trägerteils (2) eingekapselt ist.

24. Elektronischer Baustein nach Anspruch 22 oder 23, dadurch gekennzeichnet, daß wenigstens eine elektronische Schaltung ein Gehäuse (12) besitzt, das eine mit wenigstens einer Kontaktspur (13) versehene, ebene Seite aufweist, wobei dieses Gehäuse in den Trägerteil eingebettet ist und die Kontaktspur(en) mit einer der Hauptseiten fluchtet (fluchten).

25. Elektronischer Baustein nach Anspruch 24, dadurch gekennzeichnet, daß das Gehäuse (12) mit Mitteln zum Einhaken (14) versehen ist, die seine Befestigung im Trägerteil (2) ermöglichen.

## Claims

1. Method of making an electronic module comprising at least one electronic circuit (1) encapsulated in a body of synthetic material (2), said body having two essentially flat and parallel main faces,
wherein at least one electronic circuit (1) is disposed on a first sheet (23) in a first material impregnated with a first impregnating substance, a second sheet (24) in a second material impregnated with a second impregnating substance being disposed above said first sheet and said electronic circuit or circuits (1), said sheets being made of a material deformable and compressible by heat being then subjected to a pressure according to a predetermined value accompanied by a heating to a predetermined temperature, leading to the deformation of said sheets and to the liquefaction of the impregnating substances, the encapsulation of said electronic circuit or circuits (1) between the two said compressed sheets (23, 24) being obtained at the time of rigidification of the two said sheets at the time of polymerization of the impregnating substances.

2. Method of making an electronic module comprising at least one electronic circuit disposed in a housing (12), embedded in a body of synthetic material (2), said body having two essentially flat and parallel main faces, said housing having a flat face including at least one contact tract (13), said contact track being flush with one of the main faces of said body, wherein
at least one electronic housing (12) is disposed on a sheet (24) of a material impregated with an impregnating substance, said sheet being made of a material deformable and compressible by heat, the face of the housing or housings (12) opposite thereto including the contact track or tracks (13) being turned toward said sheet, the housing or housings and said sheet then being subjected to a pressure according to a predetermined value accompanied by a heating to a predetermined temperature leading to the deformation of said sheet and a liquefaction of the impregnating substance, the embedding of said housing or housings (12) in said compressed sheet (24) being obtained at the time of rigidification of said sheet at the time of polymerization of the impregnating substance.

3. Method of making an electronic module comprising at least one electronic circuit (1) encapsulated in a body of synthetic material (2), said body having two essentially flat and parallel main faces, and at least one other electronic circuit disposed in a housing (12), embedded in said body of synthetic material (2), said housing having a flat face including at least one contact track (13), said contact track being flush with one of the main faces of said body, wherein
at least one electronic circuit (1) is disposed on a first sheet (23) in a first material impregnated with a first impregnating substance, a second sheet (24) in a second material impregnated with a second impregnating substance being disposed above said first sheet and said electronic circuit or circuits (1), at least one housing (12) is disposed on the second sheet (24), the face of the housing or housings opposite thereto including the contact track or tracks (13) being turned toward said sheet (24), said sheets (23, 24) being made of a material deformable and compressible by heat being then subjected to a pressure according to a predetermined value accompanied by a heating to a predetermined temperature leading to the deformation of said sheets and to the liquefaction of the impregnating substances, the encapsulation of said electronic circuit or circuits (1) between the two said compressed sheets (23, 24) and the embedding of the housing (12) in one of said sheets being obtained at the time of rigidification of said sheets at the time of polymerization of the impregnating substances.

4. Method according to any one of the preceding claims, characterised in that the application of said pressure at a predetermined value is preceded by another application of pressure, of a lower value, accompanied by the same heating at the same predetermined temperature.

5. Method according to any one of the preceding claims, characterised in that said sheet or sheets (23, 24) are made of the same material, a woven or non-woven material, of the felt type or foam type.

6. Method according to claim 5, characterised in that the first impregnating substance is a resin and the second impregnating substance is a hardening agent.

7. Method according to claim 5, characterised in that the first impregnating substance is the same as the second impregnating substance.

8. Method according to any one of the claims 1, 2, or 3, characterised in that the predetermined pressure ranges between 0.5 kg/ cm² and 10 kg/ cm², preferably between 0.7 kg/ cm² and 5 kg/ cm², the predetermined temperature ranging between 100 °C and 200 °C, preferably between 130 °C and 150 °C.

9. Method according to claim 4, characterised in that at the time of another application of pressure, the pressure ranges between 0.05 kg/cm² and 1 kg/cm².

10. Method of making an electronic module comprising at least one electronic circuit (1) encapsulated in a body of synthetic material (2), said body having two essentially flat and parallel main faces, wherein
at least one electronic circuit (1) is disposed on a first sheet (27) in a material compressible at least by heat, made up of a thermoplastic material containing a certain quantity of air bubbles or enclosed gas, a second sheet (28) of the same material being disposed above said first sheet and said electronic circuit or circuits (1), said sheets being then subjected to a first pressure according to a first predetermined value, accompanied by a heating to a predetermined temperature causing a softening of at least part of the material constituting said sheets, then a second pressure according to a second predetermined value accompanied by a cooling, said second pressure causing a compression of the said bubbles, respectively the sheets (27, 28) of the material, the cooling causing the hardening of the material in the compressed state and the encapsulation of said electronic circuit or circuits (1) between the two said sheets.

11. Method of making an electronic module comprising at least one electronic circuit disposed in a housing (12), embedded in a body of synthetic material (2), said body having two essentially flat and parallel main faces, said housing having a flat face including at least one contact tract (13), said contact track being flush with one of the main faces of said body, wherein
at least one housing (12) is disposed on a sheet (28) in a material compressible at least by heat, made up of a thermoplastic material containing a certain quantity of air bubbles or enclosed gas, the face of the housing or housings (12) opposite thereto including the contact track or tracks (13) being turned toward said sheet, the housing or housings and said sheet being then subjected to a first pressure according to a predetermined value, accompanied by a heating to a predetermined temperature, causing a softening of at least part of the material constituting said sheet, then a second pressure according to a second predetermined value accompanied by a cooling, said second pressure causing a compression of the said bubbles, respectively of the sheet (28) of the material, the cooling causing the hardening of the material in the compressed state and the embedding of said housing or housings (12) in said sheet.

12. Method of making an electronic module comprising at least one electronic circuit (1) encapsulated in a body of synthetic material (2), said body having two essentially flat and parallel main faces, and at least one other electronic circuit disposed in a housing (12), embedded in said body of synthetic material (2), said housing having a flat face including at least one contact track (13), said contact track being flush with one of the main faces of said body, wherein
at least one electronic circuit (1) is disposed on a first sheet (27) in a material compressible at least by heat, made up a thermoplastic material containing a certain quantity of air bubbles or of enclosed gas, a second sheet (28) of the same material being disposed above said first sheet and said electronic circuit or circuits (1), at least one housing (12) is disposed on the second sheet (28), the face of the housing or housings opposite thereto including the contact track or tracks (13) being turned toward said sheet, said sheets being then subjected to a first pressure according to a first predetermined value, accompanied by a heating to a predetermined temperature, causing a softening of at least part of the materials making up said sheets, then a second pressure according to a second predetermined value accompanied by a cooling, said second pressure causing a compression of the said bubbles, respectively of the material of the said sheets (27, 28), the cooling causing the hardening of the material in the compressed state and the encapsulation of said electronic circuit or circuits (1) between the two said sheets as well as the embedding of said housing or housings (12) in one of said sheets.

13. Method of making an electronic module comprising at least one electronic circuit (1) encapsulated in a body of synthetic material (2), said body having two essentially flat and parallel main faces, wherein
at least one electronic circuit (1) is disposed on a first sheet (25) in a material compressible at least by heat, composed of a felt made up of synthetic or natural fibres coated with a thermoplastic material, a certain quantity of air being included between said fibres, a second sheet (26) of the same material being disposed above said first sheet and said electronic circuit or circuits (1), said sheets being then subjected to a first pressure according to a first predetermined value, accompanied by a heating to a predetermined temperature causing a softening of the thermoplastic coatings of said fibres, then a second pressure according to a second predetermined value accompanied by a cooling, said second pressure causing a coming together of the said fibres as well as a compression of the enclosed air, respectively of the sheets (25, 26) of the material, the cooling causing the hardening of the material in the compressed state and the encapsulation of said electronic circuit or circuits (1) between the two said sheets.

14. Method of making an electronic module comprising at least one electronic circuit disposed in a housing (12), embedded in a body of synthetic material (2), said body having two essentially flat and parallel main faces, said housing having a flat face including at least one contact tract (13), said contact track being flush with one of the main faces of said body, wherein
at least one housing (12) is disposed on a sheet (26) in a material compressible at least by heat, composed of a felt made up of synthetic or natural fibres coated with a thermoplastic material, a certain quantity of air being included between said fibres, the face of the housing or housings (12) opposite thereto including the contact track or tracks (13) being turned toward said sheet, the housing or housings and said sheet being then subjected to a first pressure according to a predetermined value, accompanied by a heating to a predetermined temperature, causing a softening of the thermoplastic coatings of said fibres, then a second pressure according to a second predetermined value accompanied by a cooling, said second pressure causing a coming together of the said fibres as well as a compression of the enclosed air, respectively of the sheet (26) of the material, the cooling causing the hardening of the material in the compressed state and the embedding of said housing or housings (12) in said sheet.

15. Method of making an electronic module comprising at least one electronic circuit (1) encapsulated in a body of synthetic material (2), said body having two essentially flat and parallel main faces, and at least one other electronic circuit disposed in a housing (12), embedded in said body of synthetic material (2), said housing having a flat face including at least one contact track (13), said contact track being flush with one of the main faces of said body, wherein
at least one electronic circuit (1) is disposed on a first sheet (25) in a material compressible at least by heat, made up a felt made up of synthetic or natural fibres coated with a thermoplastic material, a certain quantity of air being included between said fibres, a second sheet (26) of the same material being disposed above said first sheet and said electronic circuit or circuits (1), at least one housing (12) is disposed on the second sheet (26), the face of the housing or housings opposite thereto including the contact track or tracks (13) being turned toward said sheet, said sheets being then subjected to a first pressure according to a first predetermined value, accompanied by a heating to a predetermined temperature, causing a softening of the thermoplastic coatings of said fibres, then a second pressure according to a second predetermined value accompanied by a cooling, said second pressure causing a coming together of the said fibres as well as a compression of the enclosed air, respectively of the sheets (25, 26) of the material, the cooling causing the hardening of the material in the compressed state and the encapsulation of said electronic circuit or circuits (1) between the two said sheets as well as the embedding of said housing or housings (12) in one of said sheets.

16. Method according to any one of the claims 10 to 15, characterised in that the first pressure ranges between 1 kg/ cm² and 5 kg/ cm², preferably between 3 kg/cm² and 4 kg/ cm², the first temperature ranges between 100 °C and 200 °C and the second pressure ranges between 1 kg/cm² and 10 kg/cm², preferably between 3 kg/cm² and 6 kg/cm².

17. Method according to claim 16, characterised in that the first application of pressure and the second application of pressure are carried out by different pressure application means (3).

18. Method according to one of the preceding claims, characterised in that the pressure application means (3) comprise two flat and parallel plates (30) equipped with heating/cooling means (31).

19. Method according to one of the preceding claims, characterised in that an operation of impregnation of a substance with low viscosity is carried out after the cooling of the sheet or sheets.

20. Method according to one of the preceding claims, characterised in that at least one of said main faces of the module is coated with a supplementary coating (29) of a synthetic material.

21. Method according to one of the preceding claims, characterised in that the rigid plate obtained after polymerization or hardening is then cut in modules according to a predetermined format, in particular the format of a credit card, each of said modules having at least one electronic circuit (1, 12).

22. Electronic module comprising a body (2) of synthetic material having two essentially flat and parallel main faces and including at least one electronic circuit (1, 12), said module being cut according to a predetermined format, particularly the format of a credit card, said module being made according to the method of one of the preceding claims, characterised in that said body (2) is made from at least one sheet (23, 24; 25, 26; 27, 28) being made of a material deformable and compressible by heat or of a thermoplastic material including a certain quantity of air bubbles or of enclosed gas and not having any cut or opening, the two flat and parallel faces of said body not having any swelling or roughness at the place where said circuit is disposed.

23. Electronic module according to claim 22, characterised in that at least one electronic circuit is made up of an electronic component (10) connected to a coil (11), said circuit being entirely encapsulated inside the body (2).

24. Electronic module according to one of the claims 22 or 23, characterised in that at least one electronic circuit comprises a housing (12) having a flat face provided with a contact track (13), said housing being embedded in said body, said contact track or tracks being flush with one of said main faces.

25. Electronic module according to claim 24, characterised in that the housing (12) includes fastening means (14) permitting its fixation in said body (82) *<sic.* 2>.
